# EUROPEAN PATENT SPECIFICATION

(11) **EP 0 876 769 B1**
(45) Date of publication and mention of the grant of the patent: **17.07.2002**
(21) Application number: 98107650.8
(22) Date of filing: 27.04.1998
(51) Int. Cl.: A24C 5/60, B23K 26/08

(54) **Group perforating unit**
Gruppenperforierungseinheit
Unité de perforation de groupes

(30) Priority: 30.04.1997 IT BO970260
(43) Date of publication of application: 11.11.1998
(73) Proprietor: G.D Societa' per Azioni, 40133 Bologna (IT)
(72) Inventor: Rizzoli, Salvatore, 40100 Bologna (IT); Draghetti, Fiorenzo, 40059 Medicina (IT)
(74) Representative: Jorio, Paolo

(56) References cited:
- EP-A- 0 761 108

## Description

The present invention relates to a group perforating unit.

Groups, particularly groups of cigarettes, are perforated using perforating units normally forming part of a filter assembly machine, and which comprise a perforating "tool" defined by a focused laser beam for forming a number of surface perforations on the groups, which, depending on whether the perforating unit is fitted to the machine up- or downstream from a cutting unit for cutting double filters to form two single cigarettes, may be defined by two cigarette portions at opposite ends of a double filter, or by two aligned, oppositely-oriented cigarettes with the respective filters contacting each other.

In the following description, reference is made purely by way of example to a unit for perforating groups, each defined by two cigarette portions at opposite ends of a double filter, and each provided with a respective number of surface perforations arranged in two rings of perforations at opposite ends of the respective double filter.

Groups of the above type are known to be perforated using perforating units comprising a conveyor drum for feeding the groups along a path extending about a given axis and crosswise to the respective longitudinal axes of the groups; a rotation device fitted to the drum to rotate each group about the respective longitudinal axis, and in turn comprising a number of retaining elements, each for retaining a respective group by a respective cigarette portion; and a perforating device for perforating each group and forming on the group a number of perforations at the respective filter.

On account of the length of the groups, the conveyor drum of perforating units of the above type normally comprises an outer flange facing the retaining elements, and having, for each retaining element, a respective semicylindrical supporting seat, which is engaged by a respective cigarette portion to support the respective end portions of each group.

Though fairly reliable and practical in actual use, perforating units of the above type involve several drawbacks due to the sliding contact between the groups and respective semicylindrical supporting seats. The friction generated by such sliding contact in fact results in axial twisting of the groups, which, though only of a modest amount, is nevertheless responsible to some extent for the tobacco fallout from the respective cigarette portions.

To overcome this drawback, perforating units have been devised comprising a conveyor drum, in turn comprising an inner chamber housing the perforating device, and two flanges facing each other laterally of the chamber; and a rotation device, in turn comprising, for each group, two retaining elements, which are supported in rotary manner and at a given distance from each other by the two flanges, and cooperate with the cigarette portions in each group to retain the group. In this case, the perforating unit also comprises two transmissions, each of which is fitted to a respective flange of the drum, and is common to all the retaining elements on the flange to transmit rotary motion to the retaining elements. The two transmissions are substantially similar, and are in turn connected to a single drive device.

While eliminating axial twisting of the groups, adopting two retaining elements for each group and a transmission for the retaining elements of each flange poses additional drawbacks, such as complicating the design of the perforating unit and completely isolating the perforating device from the outside, so that servicing of the perforating device is fairly complicated.

In order to overcome the above drawbacks, EP-A1-761108, which discloses the preamble of claim 1, provides a unit for perforating groups, each defined by two cigarette portions and a double filter interposed therebetween, the unit having a rotatable receptacle for rotating each group about a respective longitudinal axis and comprising two aligned sections engaging respective opposite ends of the cigarette portions of a respective group; a conveyor drum for feeding the receptacle continuously along a path extending through a perforating station and about a given axis parallel to the longitudinal axes of the groups, a laser perforating device arranged outside the drum for forming a number of perforations on each group as the group travels through the perforating station, and cam devices associated to each receptacle for imparting a counter rotation to the receptacle to temporally counterbalance the movement of the drum and keep the receptacle substantially standstill during perforation while the receptacle and the respective group are rotated about the longitudinal axis of the group.

Of the two sections of each receptacle, one section is a motorised driving section, whereas the other is a driven section, which is connected to the relevant driving section by means of a transmission extending along the receptacle and between same and an axis of rotation of the conveyor drum.

Of course, the aforementioned cam devices were provided owing to the laser perforating device being arranged outside the conveyor drum, and to the necessity of keeping the focal length of the laser beam constant during perforation; and the aforementioned transmission were arranged between the relevant receptacles and the axis of rotation of the conveyor drum to render the groups accessible from the outside.

The solution provided by EP-A1-761108 is a very complicated solution which is absolutely unsuitable for perforating units in which the laser perforating device is an internal perforating device arranged inside the conveyor drum and along the axis of the same for safety and reduction in bulk purposes. In this case, in fact, the aforementioned cam devices are absolutely useless, and the aforementioned transmissions tend to prevent the laser beam from reaching the groups.

It is an object of the present invention to provide a group perforating unit, which includes an internal perforation device as defined hereinabove, and which not only prevents damaging the groups, but is also of straightforward design, is cheap to produce, and provides for fast, troublefree maintenance.

According to the present invention, there is provided a unit for perforating groups, each comprising two cigarette portions and a double filter interposed between the two cigarette portions; the unit comprising conveying means for feeding said groups along a path extending about a given axis and crosswise to a longitudinal axis of each group; rotation means supported by said conveying means to rotate each group about the respective longitudinal axis, and in turn comprising a number of pairs of retaining elements, the retaining elements in each said pair being separated and aligned with each other to retain a group by the respective two cigarette portions; perforating means for perforating each group to form on the group a number of perforations at least at the respective said filter; transmission means connecting said retaining elements in each said pair of retaining elements to each other to allow the retaining elements of each said pair to rotate in a same direction and at a same angular speed about a respective axis of rotation; each said transmission means being arranged between said path and said given axis, the unit being characterized in that said perforating means are internal and arranged along said given axis, and in that each said transmission means extends laterally of a plane passing through said given axis and the axis of rotation of the relevant pair of retaining elements.

According to a preferred embodiment of the unit set forth above, each said transmission means are shared by two adjacent pairs of retaining elements.

The present invention will now be described by way of example with reference to the accompanying drawings, in which:
Figure 1 shows an axial section of a preferred embodiment of the perforating unit according to the present invention; and
Figure 2 shows a larger-scale front view, with parts in section and parts removed for clarity, of a detail in Figure 1.

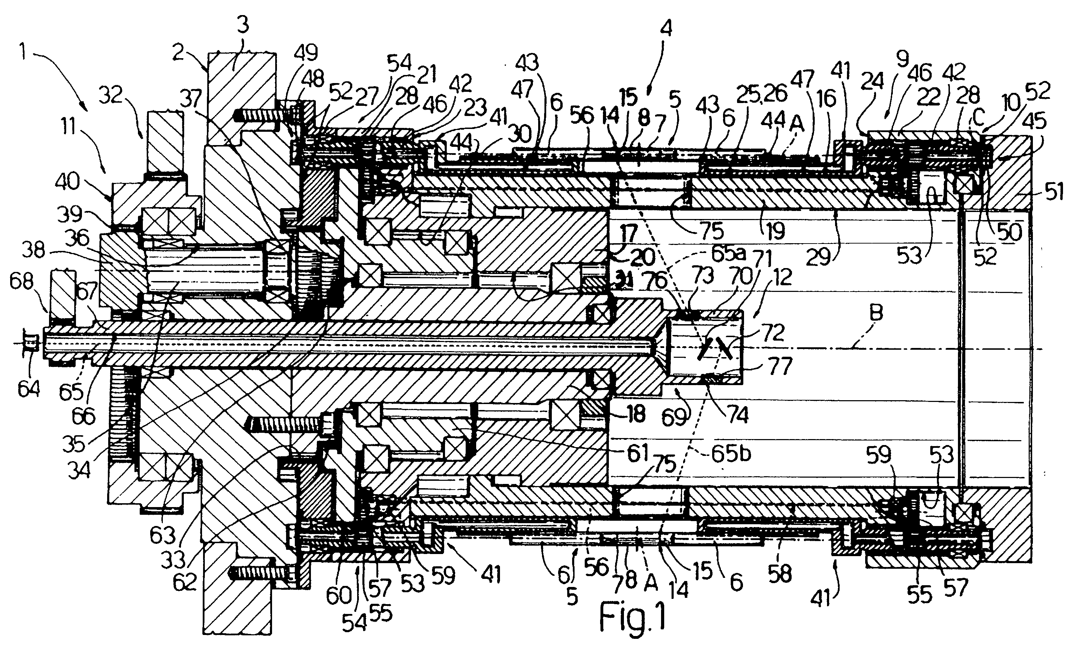

Numeral 1 in Figure 1 indicates as a whole a central portion of a known filter assembly machine comprising a frame 2 with a vertical wall 3; and a unit 4 for laser-perforating groups 5, each defined by two cigarette portions 6 aligned along a longitudinal axis A of group 5, and by a double filter 7 interposed between and joined to the two cigarette portions 6 by a respective strip 8.

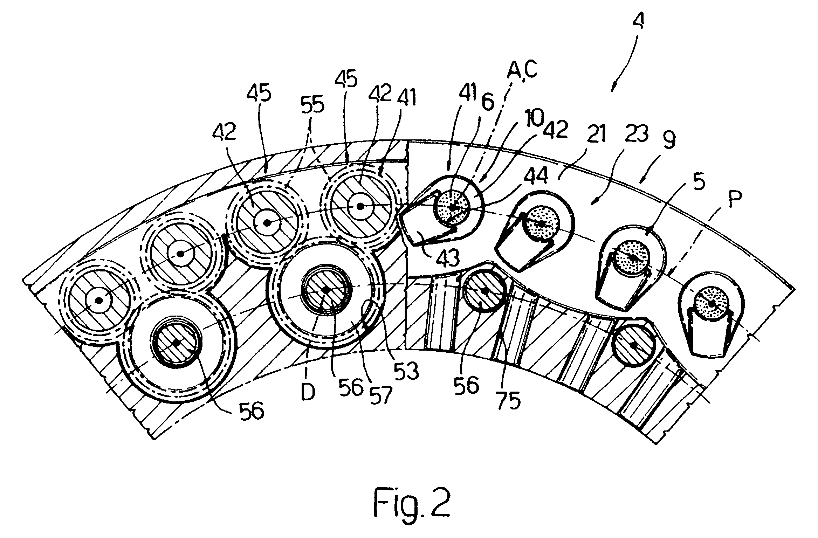

Unit 4 is supported by frame 2, and comprises a conveying device 9 for feeding groups 5 along a path P (Figure 2) extending about a given axis B and crosswise to respective axes A of groups 5; and a rotation device 10 conveyed by device 9 about axis B and for rotating each group 5 about respective axis A. Unit 4 also comprises an actuating device 11 common to and for activating devices 9 and 10; and a perforating device 12 for forming on each group 5 two parallel rings 14 of surface ventilation holes or perforations 15 at the opposite ends of each double filter 7.

Conveying device 9 comprises a conveyor drum 16, which in turn comprises a tubular body 17 fitted in rotary manner to a tubular element 18 fitted to wall 3 and extending outwards of frame 2 coaxially with axis B, and a cylindrical lateral wall 19 fitted coaxially to body 17 and projecting from body 17, along axis B, with respect to a front surface 20 of body 17 crosswise to axis B. Drum 16 also comprises two annular lateral flanges 21 and 22, which are located coaxially with axis B at opposite ends of wall 19, are connected integrally to wall 19, and have respective annular surfaces 23 and 24 facing each other and defining, with an outer surface 25 of wall 19, an annular groove 26 defining a periphery of drum 16. Finally, drum 16 comprises a disk 27 located between flange 21 and wall 3 and connected rigidly to flange 21; and disk 27 and flanges 21 and 22 comprise a number of through holes 28 aligned along respective axes C and equally spaced about axis B. Tubular body 17 defines, inwards of wall 19 and as of surface 20, a cylindrical chamber 29 open axially outwards of drum 16, and itself comprises a cylindrical inner chamber 30 facing wall 3 and communicating with chamber 29 via a cylindrical passage 31 formed through body 17 and occupied by element 18.

Drum 16 rotates about axis B at a substantially constant first angular speed V1 to successively feed groups 5 along path P, and is rotated by a gear transmission 32 forming part of device 10 and comprising an inner gear 33 formed coaxially with axis B inside disk 27, a gear 34 meshing with gear 33, and a shaft 35, which extends in rotary manner along a through hole 36 formed parallel to axis B through wall 3, and has two opposite ends 37 and 38 located outside hole 36 and respectively supporting gear 34 and a further gear 39 angularly engaging a known drive gear 40.

Rotation device 10 comprises, for each hole 28 in flange 21 and for each hole 28 in flange 22, a gondola 41, which is defined by a respective tubular cylindrical end 42 mounted for rotation inside hole 28 and coaxial with respective axis C, and by a respective hollow semicylindrical end 43 facing groove 26 and having a semicylindrical seat 44 coaxial with axis C and for retaining a respective group 5 by suction. More specifically, gondolas 41 of flange 21 are aligned with gondolas 41 of flange 22 to form respective pairs 45 of gondolas 41; and ends 43 of gondolas 41 in each pair 45 extend from flanges 21 and 22 crosswise to respective surfaces 23 and 24, and are separated from each other by a given distance approximately equal to but no less than the length of a double filter 7.

Ends 42 and 43 have respective inner chambers 46 and 47 communicating with each other; chambers 46 of gondolas 41 fitted to flange 21 communicate in fluidtight manner with a distribution groove 48 forming part of a suction device 49 and formed in the face of wall 3, while chambers 46 of gondolas 41 fitted to flange 22 communicate in fluidtight manner with a distribution groove 50 forming part of device 49 and formed in the face of a fixed annular wall 51 fitted to the face of flange 22 and forming part of frame 2. Grooves 48 and 50 extend partly about axis B along path P, and are closed respectively in fluidtight manner between wall 3 and disk 27 and between wall 51 and flange 22 by respective pairs of annular seals 52 located between wall 3 and disk 27 and between wall 51 and flange 22, and radially outwards and inwards of respective grooves 48 and 50.

Each seat 44 of each pair 45 of gondolas 41 retains by suction only one of cigarette portions 6 defining respective group 5, so as to leave respective double filter 7 completely free laterally, and rotates group 5 about respective axis A, which in use coincides with respective axis C. More specifically, gondolas 41 in each pair 45 are connected kinematically to each other to rotate in time with each other about respective axis C, and are rotated about axis C by a gear transmission 54 forming part of actuating device 11 and comprising a gear 55 formed outwards of tubular end 42 of each gondola 41, and, for each pair of adjacent pairs 45, a countershaft 56, which is supported by drum 16 to rotate about a respective axis D parallel to axis B, and is fitted at opposite ends with two gears 57 meshing with gears 55 of gondolas 41.

As shown in Figure 2, axes D of shafts 56 are located along a circumference smaller in diameter than the circumference through axes C of gondolas 41, and are each located in a substantially intermediate position between the axes C of the respective pair of adjacent pairs 45, i.e. laterally of each of the two planes extending through axis B and each of the two axes C. Each shaft 56 extends in rotary manner along a respective longitudinal groove 58 formed in surface 25, and is supported for rotation in respective through holes formed in flanges 21 and 22 via the interposition of respective bearings 59 fitted to shaft 56 axially inwards of shaft 56 with respect to respective gears 57. Gears 57 are fitted inside respective cylindrical chambers 53, which are formed coaxially with respective axes D inside flanges 21 and 22, are equally spaced about axis B, and each communicate with a respective pair of holes 28 housing two gondolas 41 of two adjacent pairs 45.

Transmission 54 also comprises a gear 60, which meshes with all the gears 55 of gondolas 41 fitted to flange 21, is located in an intermediate position between flange 21 and disk 27, and defines an end flange of a tubular body 61 fitted to tubular element 18 inside inner chamber 30 of drum 16 to rotate about axis B with respect to both element 18 and drum 16. Transmission 54 also comprises an internally-toothed gear 62 extending from tubular body 61 towards wall 3; and a further gear 63 fitted to end 37 of shaft 35, alongside gear 34, and angularly engaging gear 62.

Perforating device 12 comprises a laser source 64, e.g. a pulsed laser source, for emitting a beam 65 along an axial hole 66 formed coaxially with axis B through a tubular shaft 67, which is mounted for rotation through drum 16 and wall 3 along axis B, and is powered, by a gear transmission 68 forming part of actuating device 11, to rotate at a variable second angular speed V2 greater than first angular speed V1 in proportion to the number of perforations 15 to be formed in each ring 14 on each group 5. Shaft 67 has a reflecting head 69, which extends outwards of hole 66 and inside chamber 29, is defined laterally by a cylindrical wall 70 integral with shaft 67, and houses a semi-transparent mirror 71 and a fully reflecting mirror 72.

Mirrors 71 and 72 are located in series along axis B to divide beam 65 into two beams 65a and 65b, and are inclined to direct beams 65a and 65b through respective diametrically-opposite, axially-offset radial holes 73 and 74 formed through wall 70, and which are aligned with respective axial openings 75 formed through lateral wall 19 of drum 16 at each pairs of gondolas 41. Holes 73 and 74 are fitted inside with respective lenses 76 and 77 for focusing respective beams 65a and 65b onto respective surface points of each group 5, namely, onto the periphery of the ends of strip 8 of each group 5 projecting from the respective pairs of gondolas 41.

In actual use, groups 5 are perforated as they are fed, crosswise to respective axes A, along a perforating arc of a given angle of less than 360° and normally extending between a loading station (not shown) where each group 5 is loaded onto the respective pair 45 of gondolas 41 so that each cigarette portion 6 is seated and retained inside a respective seat 44, and an unloading station (not shown) where groups 5 are unloaded off drum 16. Groups 5 are fed crosswise along the perforating arc, and are rotated at constant speed about respective axes A by respective gondolas 41 so as to make, from the start to the end of the perforating arc, a given number of complete turns about respective axes A, depending on the number of perforations 15 to be formed in each ring 14 on each group 5.

Shaft 35, when rotated about its axis parallel to axis B by drive gear 40, provides for rotating, about axis B and in the same rotation direction, both drum 16 by meshing gears 33 and 34, and tubular body 61 by meshing gears 62 and 63. The rotation of tubular body 61 about axis B also rotates gear 60, which, meshing with all of gears 55 of gondolas 41 fitted in rotary manner to flange 21, therefore rotates these gondolas 41 about respective axes C. In addition to being carried about axis B by drum 16 in a first given rotation direction, the gondolas 41 fitted to flange 21 therefore also rotate about respective axes C in a second rotation direction opposite the first rotation direction.

The gondolas 41 fitted in rotary manner to flange 22 receive the same rotary movement about respective axes C as the corresponding gondolas 41 in respective pairs 45 by means of shafts 56, which, in addition to being rotated about axis B by drum 16, also rotate about respective axes D in a third rotation direction concordant with the first rotation direction. More specifically, each shaft 56 is rotated by respective gear 57 meshing with gears 55 of gondolas 41 fitted to flange 21, and transmits its own rotary movement to the gondolas 41 fitted to flange 22 by respective gear 57 meshing with gears 55 of gondolas 41. Being connected kinematically and directly by shafts 56, the gondolas 41 in each pair 45 therefore effect the same rotary movement about respective axis C; and, shafts 56 being located about the periphery of drum 16, reflecting head 69 is accessible directly through annular wall 51 without dismantling any of the components of rotation device 10 or actuating device 11.

It should be pointed out that unit 4 as described above may also be used to form two rings 14 of perforations 15 on groups (not shown) comprising two aligned oppositely-oriented cigarettes (not shown) with the respective filters contacting each other, i.e. on groups derived from groups 5, but with double filters 7 cut into two single filters.

## Claims

1. A unit for perforating groups, each comprising two cigarette portions (6) and a double filter (7) interposed between the two cigarette portions (6); the unit (4) comprising conveying means (9) for feeding said groups (5) along a path (P) extending about a given axis (B) and crosswise to a longitudinal axis (A) of each group (5); rotation means (10) supported by said conveying means (9) to rotate each group (5) about the respective longitudinal axis (A), and in turn comprising a number of pairs (45) of retaining elements (41), the retaining elements (41) in each said pair (45) being separated and aligned with each other to retain a group (5) by the respective two cigarette portions (6); perforating means (12) for perforating each group (5) to form on the group (5) a number of perforations (15) at least at the respective said filter (7); transmission means (56) connecting said retaining elements (41) in each said pair (45) of retaining elements (41) to each other to allow the retaining elements (41) of each said pair (45) to rotate in a same direction and at a same angular speed about a respective axis (C) of rotation; each said transmission means (56) being arranged between said path (P) and said given axis (B), the unit (1) being **characterized in that** said perforating means (12) are internal and arranged along said given axis (B), and **in that** each said transmission means extends laterally of a plane passing through said given axis (B) and the axis (C) of rotation of the relevant pair (45) of retaining elements (41).

2. A unit as claimed in Claim 1, **characterized in that** each said transmission means (56) are shared by two adjacent pairs (45) of retaining elements (41).

3. A unit as claimed in Claim 1, **characterized in that** each said transmission means (56) consist of a countershaft (56) supported for rotation by said conveying means (9) and connected angularly to both said retaining elements (41) in each said pair (45) of retaining elements (41).

4. A unit as claimed in Claim 3, **characterized in that** said conveying means (9) comprise a conveyor drum (16) mounted for rotation about said given axis (B) and having two end portions (21, 22) facing each other and each supporting one of the retaining elements (41) in each pair (45) of retaining elements (41); said pairs (45) of retaining elements (41) being equally spaced about said given axis (B).

5. A unit as claimed in Claim 4, **characterized in that** each said countershaft (56) extends between said two end portions (21, 22) of said drum (16), and is located along a periphery of the drum (16) and parallel to said given axis (B).

6. A unit as claimed in Claim 5, **characterized in that** said perforating means (12) are housed removable inside said drum (16); one (22) of said two end portions (21, 22) of said drum (16) being defined by an annular flange (22); and said perforating means (12) facing outwards of said drum (16) through said annular flange (22).

## Patentansprüche

1. Vorrichtung zum Perforieren von Gruppen, von denen jede aus zwei Zigarettenabschnitten (6) sowie einem Doppelfilter (7), welcher zwischen den beiden Zigarettenabschnitten (6) zwischengefügt ist, zusammengesetzt ist;
die Vorrichtung (4) umfasst: eine Fördereinrichtung (9) zur Zuführung der Gruppen (5) entlang einer Bahn (P), die sich um eine vorgegebene Achse (B) und quer zu einer Längsachse (A) jeder Gruppe (5) erstreckt;
eine Rotationseinrichtung (10), welche durch die Fördereinrichtung (9) gehalten wird, um jede Gruppe (5) um die jeweilige Längsachse (A) zu drehen und welche ihrerseits eine Anzahl von Paaren (45) von Halteelementen (41) besitzt, wobei die Halteelemente (41) in jedem Paar (45) getrennt und zueinander ausgerichtet sind, um eine Gruppe (5) aus jeweils zwei Zigarettenabschnitten (6) zu halten; eine Perforationseinrichtung (12) zur Perforation jeder Gruppe (5), um an der Gruppe (5) eine Anzahl von Perforationen (15) zumindest an dem jeweiligen Filter (7) zu bilden; eine Übertragungseinrichtung (56), welche die Halteelemente (41) in jedem Paar (45) von Halteelementen (41) miteinander verbindet, damit die Halteelemente (41) jedes Paares (45) sich in derselben Richtung und mit derselben Winkelgeschwindigkeit um eine jeweilige Drehachse (C) drehen können; wobei jede Übertagungseinrichtung (56) zwischen der Bahn (P) und der vorgegebenen Achse (B) angeordnet ist, und die Vorrichtung (4) **dadurch gekennzeichnet ist, dass** die Perforationseinrichtung (12) intern und entlang der vorgegebenen Achse (B) angeordnet ist, und dadurch, dass jede Übertragungseinrichtung sich seitlich einer Ebene erstreckt, die durch die vorgegebene Achse (B) und die Rotationsachse (C) des relevanten Paares (45) der Halteelemente (41) verläuft.

2. Vorrichtung nach Anspruch 1, **dadurch gekennzeichnet, dass** jede Übertragungseinrichtung (56) durch zwei benachbarte Paare (45) von Halteelementen (41) gemeinsam benutzt wird.

3. Vorrichtung nach Anspruch 1, **dadurch gekennzeichnet, dass** jede Übertragungseinrichtung (56) eine Gegenwelle (56) umfasst, die zwecks Drehung durch die Fördereinrichtung (9) gehalten wird und winklig mit beiden Halteelementen (41) in jedem Paar (45) der Halteelemente (41) verbunden ist.

4. Vorrichtung nach Anspruch 3, **dadurch gekennzeichnet, dass** die Fördereinrichtung (9) eine Fördertrommel (16) umfasst, die zwecks Drehung um die vorgegebene Achse (B) angeordnet ist und zwei Endabschnitte (21, 22) aufweist, die aufeinander zu weisen, und jeder eines der Halteelemente (41) von jedem Paar (45) der Halteelemente (41) hält; wobei die Paare (45) der Halteelemente (41) um die vorgegebeue Achse (B) gleich beabstandet sind.

5. Vorrichtung nach Anspruch 4, **dadurch gekennzeichnet, dass** sich jede Gegenwelle (56) zwischen den beiden Endabschnitten (21, 22) der Trommel (16) erstreckt und entlang der Peripherie der Trommel (16) und parallel zur vorgegebenen Achse (B) angeordnet ist.

6. Vorrichtung nach Anspruch 5, **dadurch gekennzeichnet, dass** die Perforationseinrichtung (12) auswechselbar innerhalb der Trommel (16) angeordnet ist; dass einer (22) der beiden Endabschnitte (21, 22) der Trommel (16) durch einen Ringflansch (22) gebildet wird; und dass die Perforationseinrichtung (12) von der Trommel (16) durch den Ringflansch (22) nach außen weist

## Revendications

1. Unité pour perforer des groupes, comportant chacun deux parties de cigarette (6) et un double filtre (7) interposé être les deux parties de cigarette (6), l'unité (4) comportant des moyens de transport (9) destinés à acheminer lesdits groupes (5) le long d'un trajet (P) s'étendant autour d'un axe donné (B) et transversalement à un axe longitudinal (A) de chaque groupe (5), des moyens de rotation (10) supportés par lesdits moyens de transport (9) pour faire tourner chaque groupe (5) autour de l'axe longitudinal respectif (A), et comportant à leur tour plusieurs paires (45) d'éléments de retenue (41), les éléments de retenue (41) de chacune desdites paires (45) étant séparés et alignés l'un avec l'autre pour retenir un groupe (5) par les deux parties de cigarette respectives (6), des moyens de perforation (12) pour perforer chaque groupe (5) pour former sur le groupe (5) plusieurs perforations (15) au moins dans ledit filtre respectif (7), des moyens de transmission (56) reliant l'un à l'autre lesdits éléments de retenue (41) de chaque paire (45) d'éléments de retenue (41) pour permettre aux éléments de retenue (41) de chaque dite paire (45) de tourner dans un même sens et à une même vitesse angulaire autour d'un axe de rotation respectif (C), chacun desdits moyens de transmission (56) étant agencé entre ledit trajet (P) et ledit axe donné (B), l'unité (1) étant **caractérisée en ce que** lesdits moyens de perforation (12) sont internes et agencés le long dudit axe donné (B), et **en ce que** chacun desdits moyens de transmission s'étend latéralement par rapport à un plan passant par ledit axe donné (B) et l'axe de rotation (C) de la paire concernée (45) d'éléments de retenue (41).

2. Unité selon la revendication 1, **caractérisée en ce que** chacun desdits moyens de transmission (56) est partagé par deux paires adjacentes (45) d'éléments de retenue (41).

3. Unité selon la revendication 1, **caractérisée en ce que** chacun desdits moyens de transmission (56) est constitué d'un arbre intermédiaire (56) supporté pour tourner par lesdits moyens de transport (9) et relié angulairement aux deux dits éléments de retenue (41) de chaque dite paire (45) d'éléments de retenue (41).

4. Unité selon la revendication 3, **caractérisée en ce que** lesdits moyens de transport (9) comportent un tambour de convoyeur (16) monté pour tourner autour dudit axe donné (B) et ayant deux parties d'extrémité (21, 22) en vis-à-vis l'une de l'autre et supportant chacune un des éléments de retenue (41) de chaque paire (45) d'éléments de retenue (41), lesdites paires (45) d'éléments de retenue (41) étant espacées de manière égale autour dudit axe donné (B).

5. Unité selon la revendication 4, **caractérisée en ce que** chacun desdits arbres intermédiaires (56) s'étend entre lesdites deux parties d'extrémité (21, 22) dudit tambour (16) et est positionné le long d'une périphérie du tambour (16) et parallèlement audit axe donné (B).

6. Unité selon la revendication 5, **caractérisée en ce que** lesdits moyens de perforation (12) sont reçus de manière amovible à l'intérieur dudit tambour (16), l'une (22) desdites deux parties d'extrémité (21, 22) dudit tambour (16) étant définie par une bride annulaire (22), et lesdits moyens de perforation (12) étant dirigés vers l'extérieur dudit tambour (16) à travers ladite bride annulaire (22).
